# EUROPÄISCHE PATENTSCHRIFT

(11) **EP 3 157 737 B1**
(45) Veröffentlichungstag und Bekanntmachung des Hinweises auf die Patenterteilung: **18.07.2018**
(21) Anmeldenummer: 15730177.1
(22) Anmeldetag: 22.06.2015
(51) Int. Cl.: B29C 67/00, C08G 18/66, C08G 18/76, C08G 18/32, C08G 18/42

(54) **VERWENDUNG VON THERMOPLASTISCHEN POLYURETHANPULVERN**
USE OF THERMOPLASTIC POLYURETHANE POWDERS
UTILISATION DE POLYURÉTHANE EN POUDRE THERMOPLASTIQUE

(30) Priorität: 23.06.2014 EP 14173556
(43) Veröffentlichungstag der Anmeldung: 26.04.2017
(73) Patentinhaber: Covestro Deutschland AG, 51373 Leverkusen (DE); Lehmann & Voss & Co. KG, 20354 Hamburg (DE)
(72) Erfinder: HÄTTIG, Jürgen, 51519 Odenthal (DE); REICHERT, Peter, 41541 Dormagen (DE); RECHBERGER, Marcus, 22359 Hamburg (DE)
(74) Vertreter: Levpat
(86) Internationale Anmeldenummer: PCT/EP2015/063916
(87) Internationale Veröffentlichungsnummer: WO 2015/197515

(56) Entgegenhaltungen:
- DE-A1-102010 061 854
- US-B2- 8 114 334

## Beschreibung

Die vorliegende Erfindung betrifft die Verwendung von thermoplastischen Polyurethanpulvern in pulverbasierten additiven Fertigungsverfahren zur Herstellung von thermoplastischen Gegenständen.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen, wie z.B. Fräsen, Bohren, Zerspanen. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD Zeichnung des Gegenstands. Ist die Geometrie dieses Gegenstands komplex, z.B. mit geometrischen Hinterschneidungen, müssen zusätzlich Stützmaterialien mit gedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim beschrieben FDM-Verfahren. Zudem können verschiedene Gegenstände eng gepackt im so genannten Pulverbett angeordnet bzw. gefertigt werden. Aufgrund dieser Vorteile gelten pulverbasierte additive Fertigungsverfahren zu den wirtschaftlichsten additiven Verfahren am Markt. Sie werden daher überwiegend von industriellen Nutzern verwendet.

Beispiele für pulverbasierte additive Fertigungsverfahren sind das sogenannte Lasersintern oder das High Speed Sintering (HSS). Sie unterscheiden sich untereinander in der Methode, die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren (EP 1648686 B) erfolgt der Energieeintrag über Infrarot(IR)strahler in Kombination mit einem selektiv in das Pulverbett gedruckten IR-Absorbers. Das so genannte Selective Heat Sintering (SHS™) nutzt die Druckeinheit eines konventionellen Thermodruckers, um thermoplastische Pulver selektiv aufzuschmelzen.

Insbesondere das Lasersintern ist schon viele Jahre in der Industrie etabliert und wird vorrangig für die Herstellung prototypischer Gegenstände genutzt. Wenngleich schon seit Jahren von Medien, Unternehmen und den in diesem Gebiet tätigen Forschungseinrichtungen angekündigt, setzt es sich aber als Verfahren für die Serienfertigung individuell gestalteter Produkte am Markt nicht durch. Einer der wesentlichen Gründe hierfür sind die verfügbaren Materialien und deren Eigenschaften. Auf Basis der Polymere, die heute in pulverbasierten additiven Fertigungsverfahren eingesetzt werden, entstehen Gegenstände, deren mechanische Eigenschaften sich grundlegend von der Charakteristik der Materialien unterscheiden, wie sie in anderen kunststoffverarbeitenden Verfahren, wie dem Spritzgießen, bekannt sind. Bei der Verarbeitung durch die additiven Fertigungsverfahren verlieren die eingesetzten thermoplastischen Materialien ihre spezifische Charakteristik.

Polyamid 12 (PA12) ist der derzeit am meisten eingesetzte Werkstoff für pulverbasierte additive Fertigungsverfahren, wie z.B. dem Lasersintern. PA12 zeichnet sich durch hohe Festigkeit und Zähigkeit aus, wenn es im Spritzguss oder durch Extrusion verarbeitet wird. Ein handelsübliches PA12 zeigt beispielsweise nach dem Spritzgießen eine Bruchdehnung von mehr als 200%. PA12-Gegenstände, die mit dem Lasersinterverfahren hergestellt sind, zeigen hingegen Bruchdehnungen um 15%. Das Bauteil ist spröde und kann daher nicht mehr als typisches PA12-Bauteil angesehen werden. Gleiches gilt für Polypropylen (PP), welches als Pulver für das Lasersintern angeboten wird. Auch dieses Material versprödet und verliert damit die PP-typischen zäh-elastischen Eigenschaften. Gründe hierfür sind in der Morphologie der Polymere zu finden.

Während des Aufschmelzvorgangs mittels Laser oder IR und insbesondere beim Abkühlen entsteht eine unregelmäßige innere Struktur der so genannten teilkristallinen Polymere (beispielsweise PA12 und PP). Die innere Struktur (Morphologie) teilkristalliner Polymere ist teilweise durch hohe Ordnung gekennzeichnet. Ein gewisser Anteil der Polymerketten bildet beim Abkühlen kristalline, eng gepackte Strukturen aus. Während des Aufschmelzens und Abkühlens wachsen diese Kristallite unregelmäßig an den Grenzen der nicht komplett aufgeschmolzenen Partikel sowie an den ehemaligen Korngrenzen der Pulverpartikel und an im Pulver enthaltenen Additiven. Die Unregelmäßigkeit der so entstehenden Morphologie begünstigt unter mechanischer Belastung das Entstehen von Rissen. Die beim pulverbasierten additiven Verfahren nicht zu vermeidende Restporosität fördert das Risswachstum. Spröde Eigenschaften der so entstandenen Bauteile sind das Resultat. Zur Erläuterung dieser Effekte wird auf European Polymer Journal 48 (2012), Seiten 1611-1621 verwiesen.

Auch die im Lasersintern eingesetzten elastischen Polymere auf Basis von Block-Copolymeren zeigen ein für die eingesetzten Polymere untypisches Eigenschaftsprofil, wenn sie als Pulver mit additiven Fertigungsverfahren zu Gegenständen verarbeitet werden. Beim Lasersintern kommen heute thermoplastische Elastomere (TPE) zum Einsatz. Gegenstände, die aus den heute verfügbaren TPEs hergestellt werden, weisen nach dem Erstarren eine hohe Restporosität auf und die ursprüngliche Festigkeit des TPE Werkstoffs ist nicht im daraus gefertigten Gegenstand messbar. In der Praxis werden diese porösen Bauteile daher nachträglich mit flüssigen, aushärtenden Polymeren infiltriert, um das erforderliche Eigenschaftsprofil einzustellen. Die Festigkeit und Dehnung bleibt trotz dieser zusätzlichen Maßnahme auf einem niedrigen Niveau. Der zusätzliche Verfahrensaufwand führt - neben den immer noch unzureichenden mechanischen Eigenschaften - zu einer schlechten Wirtschaftlichkeit dieser Materialien.

Aufgabe der vorliegenden Anmeldung war es daher, Mittel zur Verfügung zu stellen, die nach ihrer Verarbeitung mittels pulverbasierten additiven Fertigungsverfahren Gegenstände liefern, die gute mechanische Eigenschaften aufweisen.

Diese Aufgabe konnte durch die erfindungsgemäßen Mittel aus thermoplastischen Polyurethanpulvern und Fließhilfsmitteln und die Verwendung dieser Mittel in pulverbasierten additiven Fertigungsverfahren zur Herstellung von thermoplastischen Gegenständen gelöst werden.

Gegenstand der Erfindung sind thermoplastische pulverförmige Mittel enthaltend 0,02 bis 0,5 Gew.-%, bezogen auf die Gesamtmenge an Mittel, Fließmittel und pulverförmiges thermoplastisches Polyurethan (pulverförmiges TPU), wobei mindestens 90 Gew.-% des Mittels einen Teilchendurchmesser von kleiner 0,25 mm, bevorzugt kleiner 0,2 mm, besonders bevorzugt kleiner 0,15 mm aufweist und das thermoplastische Polyurethan erhältlich ist aus der Reaktion der Komponenten
a) mindestens ein organisches Diisocyanat
b) mindestens eine mit gegenüber Isocyanatgruppen reaktive Gruppen aufweisende Verbindung mit einem zahlenmittleren Molekulargewicht (Mn) von 500 g/mol bis 6000 g/mol und einer zahlenmittleren Funktionalität der Gesamtheit der Komponenten unter b) von 1,8 bis 2,5
c) mindestens ein Kettenverlängerungsmittel mit einem zahlenmittleren Molekulargewicht (Mn) von 60 bis 450 g/mol und einer zahlenmittleren Funktionalität der Gesamtheit der Kettenverlängerungsmittel unter c) von 1,8 bis 2,5
   in Gegenwart von
d) gegebenenfalls Katalysatoren
e) gegebenenfalls Hilfs- und/oder Zusatzmitteln
f) gegebenenfalls Kettenabbrechern
dadurch gekennzeichnet, dass das thermoplastische Polyurethan einen Schmelzbereich (DSC, differential scanning calorimetry; 2. Aufheizung mit Aufheizrate 5 K/min.) von 20°C bis 170°C aufweist und eine Shore A Härte (DIN ISO 7619-1) von 50 bis 95 hat und bei einer Temperatur T eine Schmelzvolumenrate (melt volume rate (MVR)) gemäß ISO 1133 von 5 bis 15 cm³/10min und eine Änderung des MVR bei einer Erhöhung dieser Temperatur T um 20 °C von kleiner 90 cm³/10 min, bevorzugt kleiner 70 cm³/10min, besonders bevorzugt kleiner 50 cm³/10min aufweist
zur Herstellung von Gegenständen in pulverbasierten additiven Fertigungsverfahren.

Bei der DSC-Messung wird das Material folgendem Temperaturzyklus unterworfen: 1 Minute bei minus 60°C, danach Aufheizen auf 200°C mit 5 Kelvin/Minute, dann Abkühlen auf minus 60 °C mit 5 Kelvin/Minute, dann 1 Minute bei minus 60°C, dann Aufheizen auf 200°C mit 5 Kelvin/Minute.

Das thermoplastische Polyurethanpulver weist ein flaches Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "flach" gilt ein Aufschmelzverhalten dann, wenn der MVR bei einer Ausgangstemperatur T_{X} einen Ausgangswert von 5 bis 15 cm³/10 min aufweist und durch Temperaturerhöhung um 20 °C auf Tₓ₊₂₀ um nicht mehr als 90 cm³/10 min steigt.

Ein weiterer Gegenstand der Erfindung ist die Verwendung der erfindungsgemäßen Mittel in pulverbasierten additiven Fertigungsverfahren zur Herstellung von thermoplastischen Gegenständen.

Ein weiterer Gegenstand der Erfindung sind thermoplastische Gegenstände hergestellt mittels pulverbasierten additiven Fertigungsverfahren aus den erfindungsgemäßen Mitteln.

Das erfindungsgemäße thermoplastische Mittel ist zur Verarbeitung mittels pulverbasierten additiven Fertigungsverfahren geeignet, und die damit hergestellten Gegenstände weisen ein hohes mechanisches Eigenschaftsprofil auf. So liegt beispielsweise die Reißfestigkeit der Gegenstände bei > 10 MPa bei einer Reißdehnung von > 400%.

Das Eigenschaftsprofil der mit den erfindungsgemäßen thermoplastischen Mitteln hergestellten Gegenstände ist insbesondere durch hohe Festigkeit bei gleichzeitig hoher Dehnung und somit durch große Elastizität und Zähigkeit gekennzeichnet. Pulverbasierte additive Fertigungsverfahren, wie z.B. das Lasersintern oder das High-Speed Sintering (HSS), können für die Verarbeitung der erfindungsgemäßen Mittel eingesetzt werden. Das hohe mechanische Eigenschaftsprofil wird ohne zusätzliche Nachbehandlungsschritte erreicht. Die erfindungsgemäß eingesetzten TPU-Pulver erlauben somit die additive Herstellung von Gegenständen mit mechanischen Eigenschaften, wie sie bislang mit diesen Verfahren nicht erreicht werden konnten. Dies wurde überraschend durch die erfindungsgemäß eingesetzten thermoplastischen Polyurethane erreicht, die ein flaches Aufschmelzverhalten aufweisen.

Der chemische Aufbau der eingesetzten thermoplastischen Polyurethane (TPU) ist an sich bekannt und z.B. in EP-A 1068250 beschrieben. Es handelt sich um Multiphasensysteme bestehend aus Blockcopolymeren basierend auf einem oder mehreren längerkettigen Polyolen und einem oder mehreren kurzkettigen Isocyanat-reaktiven Verbindungen und verschiedenen Additiven sowie organischen Diisocyanaten.

Das TPU-Pulver wird vorzugsweise durch mechanische Zerkleinerung von Granulaten hergestellt, wobei das Granulat mit flüssigem Stickstoffe / flüssiger Luft sehr stark abgekühlt wird. Mindestens 90% des Pulvers sollten einen Teilchendurchmesser von kleiner 0,25 mm, bevorzugt kleiner 0,2 mm, besonders bevorzugt kleiner 0,15 mm aufweisen. In das hergestellte TPU-Pulver werden z.B. auf dem Markt erhältliche Fließmittel eingemischt, wodurch die Rieselfähigkeit des TPU-Pulvers gewährleistet wird.

Die eingesetzten TPU zeichnen sich durch eine Härte von kleiner 95 Shore A und einen niedrigen Schmelzbereich und ein flaches Aufschmelzverhalten aus.

Das Mittel kann durch die vorgenannten Eigenschaften des TPU schon bei niedrigen Bauraumtemperaturen verarbeitet werden und führt z.B. bei den im Lasersintern üblichen Bedingungen zu vergleichsweise homogenen Teilen mit geringer Restporosität, die sich durch gute mechanische Eigenschaften auszeichnen.

Die erfindungsgemäßen Gegenstände, die mittels pulverbasierten additiven Fertigungsverfahren aus den erfindungsgemäßen Mitteln hergestellt sind, zeichnen sich durch hohe Zugfestigkeit bei großer Bruchdehnung aus. Diese Eigenschaften konnten bislang mit anderen Materialien mittels additiver Fertigung nicht erreicht werden. Dies schließt auch solche Materialien mit ein, die mit nichtpulverbasierten additiven Fertigungsverfahren zu Gegenständen verarbeitet werden.

### Herstellung des thermoplastischen Polyurethans (TPU)

Zur Synthese des TPU zur Herstellung des erfindungsgemäßen Mittels seien im Einzelnen beispielhaft als Isocyanatkomponente unter a) genannt: aliphatische Diisocyanate wie Ethylendiisocyanat, 1,4-Tetramethylendiisocyant, 1,6-Hexamethylendiisocyanat, 1,12-Dodecandiisocyanat, cycloaliphatische Diisocyanate wie Isophorondiisocyanat, 1,4-Cyclohexandiisocyanat, l-Methyl-2,4-cyclohexandiisocyanat und l-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'-Diphenylmethandiisocyanat. Gemische aus 2,4'-Diphenylmethandiisocyanat und 4,4'-Diphenylmethandiisocyanat, urethanmodifizierte flüssige 4,4'- Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens so viel Polyisocyanat zugesetzt werden, daß ein noch thermoplastisch verarbeitbares Produkt entsteht. Beispiele für Polyisocyanate sind Triphenylmethan-4,4',4"- triisocyanat und Polyphenyl-polymethylen-polyisocyanate.

Als längerkettige Isocyanat-reaktive Verbindungen unter b) seien beispielhaft solche mit im Mittel mindestens 1,8 bis 3,0 zerewitinoff-aktiven Wasserstoffatomen und einem zahlenmittleren Molekulargewicht von 500 bis 10000 g/mol genannt. Eingeschlossen sind neben Aminogruppen Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mn von 500 bis 6000 g/mol, besonders bevorzugt solche mit einem zahlenmittleren Molekulargewicht Mn von 600 bis 4000 g/mol, z.B. Hydroxylgruppen aufweisende Polyesterpolyole, Polyetherpolyole, Polycarbonatpolyole und Polyesterpolyamide.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht:Wasser, Aminoalkohole, wie N-Alkyldiethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyetherdiole eingesetzt werden, jedoch höchstens in solcher Menge, dass ein noch thermoplastisch verarbeitbares Produkt entsteht. Die im wesentlichen linearen Polyetherdiole besitzen vorzugsweise zahlenmittlere Molekulargewichte n von 500 bis 6000 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B gegebenenfalls substituierten ω-Caprolactonen. Als Polyesterdiole vorzugsweise verwendet werden Ethandiolpolyadipate, 1,4-Butandiolpolyadipate, Ethandiol- 1,4-Butandiolpolyadipate, 1,6-Hexandiol-neopentylglykolpolyadipate, 1,6-Hexandiol-1,4-butandiolpolyadipate und Polycaprolactone. Die Polyesterdiole besitzen bevorzugt zahlenmittlere Molekulargewichte Mn von 450 bis 6000 g/mol und können einzeln oder in Form von Mischungen untereinander zur Anwendung kommen.

Die Kettenverlängerungsmittel unter c) besitzen im Mittel 1,8 bis 3,0 zerewitinoff-aktive Wasserstoffatome und haben ein Molekulargewicht von 60 bis 450 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(b-hydroxyethyl)-hydrochinon, ethoxylierte Bisphenole, z.B. 1,4-Di(b-hydroxyethyl)- bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden.

Daneben können auch kleinere Mengen an Triolen zugesetzt werden.

Gegenüber Isocyanaten monofunktionelle Verbindungen können unter f) in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen sollten bevorzugt so gewählt werden, dass ihre zahlenmittlere Funktionalität zwei nicht wesentlich überschreitet, wenn thermoplastisch verarbeitbare Polyurethanelastomere hergestellt werden sollen. Falls höherfunktionelle Verbindungen eingesetzt werden, sollte durch Verbindungen mit einer Funktionalität <2 die Gesamtfunktionalität entsprechend herabgesetzt werden.

Die relativen Mengen der Isocyanatgruppen und Isocyanat reaktiven Gruppen werden bevorzugt so gewählt, dass das Verhältnis 0,9:1 bis 1,2:1 beträgt, bevorzugt 0,95:1 bis 1,1:1.

Die erfindungsgemäß verwendeten thermoplastischen Poyurethanelastomere können als Hilfs- und/oder Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren, Antiblockmittel, Inhibitoren, Pigmente, Farbstoffe, Flammschutzmittel, Stabilisatoren gegen Alterungs- und Witterungseinflüsse, gegen Hydrolyse, Licht, Hitze und Verfärbung, Weichmacher, Gleit- und Entformungsmittel, fungistatisch und bakteriostatisch wirkende Substanzen, Verstärkungsmittel sowie anorganische und/oder organische Füllstoffe und deren Mischungen.

Beispiele für die Zusatzstoffe sind Gleitmittel, wie Fettsäureester, deren Metallseifen, Fettsäureamide, Fettsäureesteramide und Siliconverbindungen, und Verstärkungsmittel, wie z.B. faserartige Verstärkungsstoffe, wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy) ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den eingesetzten TPU beträgt in der Regel etwa 0 bis 5 Gew.-%, bevorzugt 0 bis 2 Gew.-%, bezogen auf die Gesamtmenge an TPU.

### Herstellung des Mittels:

Die oben genannten thermoplastischen Polyurethane haben nach ihrer Herstellung üblicherweise Granulatform und werden gemeinsam mit pulverförmigen Additiven zu einem Pulver weiterverarbeitet. Diese Additive dienen unter anderem als Fließmittel zur Verbesserung der Rieselfähigkeit und zur Verbesserung der Filmbildung bzw. Entgasung der Schmelzeschicht beim Sinterprozess und werden in einer Menge von 0,02 bis 0,5 Gew.-% dem TPU beigemengt. Üblicherweise ist das Fließmittel eine anorganische gepulverte Substanz, wobei mindestens 90 Gew.-% des Fließmittels einen Teilchenduchmesser von kleiner 25 µm haben und die Substanz vorzugsweise ausgewählt ist aus der Gruppe bestehend aus hydratisierten Siliciumdioxiden, hydrophobierten pyrogenen Kieselsäuren, amorphem Aluminiumoxid, glasartigen Siliciumdioxiden, glasartigen Phosphaten, glasartigen Boraten, glasartigen Oxiden, Titandioxid, Talk, Glimmer, pyrogenen Siliciumdioxiden, Kaolin, Attapulgit, Calciumsilicaten, Aluminiumoxid und Magnesiumsilicaten.

Die Zerkleinerung der hergestellten TPU-Granulate kann gemeinsam mit dem Fließmittelpulver bevorzugt mechanisch unter Tiefkälte (kryogener Zerkleinerung) erfolgen. Dabei wird das Granulat durch Einsatz von flüssigem Stickstoff oder flüssiger Luft tiefgefroren und in Stiftmühlen zerkleinert. Das Größtkorn wird durch eine nach der Mühle angeordnete Siebmaschine eingestellt. Dabei sollten mindestens 90 Gew.-% des Mittels einen Durchmesser von kleiner 0,25 mm, bevorzugt kleiner 0,2 mm, besonders bevorzugt kleiner 0,15 mm aufweisen.

Die Erfindung soll anhand der nachfolgenden Beispiele näher erläutert werden.

### Beispiele

### Beispiel 1:

Das TPU (thermoplastisches Polyurethan) wurde aus 1 Mol Polyesterdiol mit einem zahlenmittleren Molekulargewicht von ca. 900 g/mol auf Basis von ca. 56,7 Gew.-% Adipinsäure und ca. 43,3 Gew.-% 1,4-Butandiol sowie ca. 1,45 Mol 1,4-Butandiol, ca. 0,22 Mol 1,6-Hexandiol, ca. 2,67 Mol technisches 4,4'-Diphenylmethandiisocyanat (MDI) mit >98 Gew.-% 4,4'-MDI, 0,05 Gew.-% Irganox® 1010 (Pentaerythritoltetrakis(3-(3,5-di-tert-butyl-4-hydroxyphenyl)propionat) von BASF SE), 1,1 Gew.-% Licowax® E (Montansäureester von Clariant) und 250 ppm Zinndioctoat nach dem bekannten Statikmischer-Extruder-Verfahren hergestellt.

### Beispiel 2

Das TPU wurde aus 1 Mol Polyesterdiol mit einem zahlenmittleren Molekulargewicht von ca. 900 g/mol auf Basis von ca. 56,7 Gew.-% Adipinsäure und ca. 43,3 Gew.-% 1,4-Butandiol sowie ca. 0,85 Mol 1,4-Butandiol, ca. 0,08 Mol 1,6-Hexandiol, ca. 1,93 Mol technisches 4,4'-Diphenylmethandiisocyanat (MDI) mit >98 Gew.-% 4,4'-MDI, 0,05 Gew.-% Irganox® 1010 (Pentaerythritoltetrakis(3-(3,5-di-tert-butyl-4-hydroxyphenyl)propionat) von BASF SE), 0,75 Gew.-% Licowax® E (Montansäureester von Clariant) und 250 ppm Zinndioctoat nach dem bekannten Statikmischer-Extruder-Verfahren hergestellt.

Den unter Beispiel 1 und 2 hergestellten TPU wurden 0,2 Gew.-%, bezogen auf TPU, hydrophobierter pyrogener Kieselsäure als Fließmittel (Aerosil® R972 von Evonik) zugegeben und die Mischung mechanisch unter Tiefkälte (kryogener Zerkleinerung) in einer Stiftmühle zu Pulver verarbeitet und anschließend durch eine Siebmaschine klassifiziert. 90 Gew.-% des Mittels hatten einen Teilchendurchmesser von kleiner 140 µm (gemessen mittels Laserbeugung (HELOS - Partikelgrößenanalyse)).

### Vergleichsbeispiel 3:

Das TPU (thermoplastisches Polyurethan) wurde aus 1 Mol Polyesterdiol, bestehend aus einer 50/50 Mischung aus einem Ester mit einem zahlenmittleren Molekulargewicht von ca. 2250 g/mol auf Basis von ca. 59,7 Gew.-% Adipinsäure und ca. 40,3 Gew.-% 1,4-Butandiol und einem Ester mit einem zahlenmittleren Molekulargewicht von ca. 2000 g/mol auf Basis von ca. 66,1 Gew.-% Adipinsäure, 19,9 Gew.-% Ethylenglycol und 14 Gew.-% Butandiol sowie ca. 2,8 Mol 1,4-Butandiol, ca. 3,8 Mol technisches 4,4'-Diphenylmethandiisocyanat (MDI) mit >98 Gew.-% 4,4'-MDI, 0,1 Gew.-% Irganox® 1010 (Pentaerythritoltetrakis(3-(3,5-di-tert-butyl-4-hydroxyphenyl)propionat) von BASF SE), 0,4 Gew.-% Licolub FA6 (Stearoylethylendiamid von Clariant), 0,6 Gew.-% Silikonöl M350, 0,2 Gew.-% Stabaxol I LF (Monomeres Carbodiimid von Rhein Chemie)und 5 ppm Tyzor AA105 (Titanacetylacetonat von Dorf Ketal Speciality Catalysts)nach dem bekannten Weichsegment-Vorverlängerungsverfahren hergestellt.

Es wurde mit 0,2 Gew.-%, bezogen auf TPU, hydrophobierter pyrogener Kieselsäure als Fließmittel (Aerosil® R972 von Evonik) analog zu Beispiel 1 und 2 unter Tiefkälte (kryogener Zerkleinerung) in einer Stiftmühle zu Pulver verarbeitet und anschließend durch eine Siebmaschine klassifiziert. Etwa 90 Gew.-% des Mittels hatten einen Teilchendurchmesser von kleiner ca. 150 µm (gemessen mittels Laserbeugung (HELOS - Partikelgrößenanalyse)).

### Vergleichsbeispiel 4:

Das TPU (thermoplastisches Polyurethan) wurde aus 1 Mol Polyesterdiol mit einem zahlenmittleren Molekulargewicht von ca. 2250 g/mol auf Basis von ca. 59,7 Gew.-% Adipinsäure und ca. 40,3 Gew.-% 1,4-Butandiol sowie ca. 3,9 Mol 1,4-Butandiol, ca. 4,9 Mol technisches 4,4'-Diphenylmethandiisocyanat (MDI) mit >98 Gew.-% 4,4'-MDI, 0,05 Gew.-% Irganox® 1010 (Pentaerythritoltetrakis(3-(3,5-di-tert-butyl-4-hydroxyphenyl)propionat) von BASF SE), 0,2 Gew.-% Loxamid 3324 (N,N'-Ethylen-bis-stearylamid von Emery Oleochemicals), 0,2 Gew.-% Stabaxol I LF (Monomeres Carbodiimid von Rhein Chemie) und 10 ppm Tyzor AA105 (Titanacetylacetonat von Dorf Ketal Speciality Catalysts) nach dem bekannten Prepolymerverfahren hergestellt. Es wurde mit 0,2 Gew.-%, bezogen auf TPU, hydrophobierte pyrogene Kieselsäure als Fließmittel (Aerosil® R972 von Evonik) analog zu Beispiel 1 und 2 unter Tiefkälte (kryogener Zerkleinerung) in einer Stiftmühle zu Pulver verarbeitet und anschließend durch eine Siebmaschine klassifiziert. Etwa 90 Gew.-% des Mittels hatten einen Teilchendurchmesser von kleiner ca. 150 µm (gemessen mittels Laserbeugung (HELOS - Partikelgrößenanalyse)).

### Vergleich 5:

Die Werte aus dem Beispiel 1 aus US 8114334 B2 wurden als Vergleichswerte in der Tabelle 3 eingetragen.

### Vergleich 6:

Die Werte aus dem Vergleichsbeispiel aus US 8114334 B2 wurden als Vergleichswerte in der Tabelle 3 eingetragen.

**Tabelle 1: Eigenschaften der hergestellten TPU**

| | | *Vergleichsbeispiel 3* | *Vergleichsbeispiel 4* | *Beispiel 1* | *Beispiel 2* |
|---|---|---|---|---|---|
| *Schmelzbereich** | *[von C° bis °C]* | *100-210* | *100-200* | *80-170* | *80-155* |
| *Härte* | *[Shore A]* | *86* | *90* | *90* | *70* |
| Charakterisierung des Aufschmelzverhalten über MVR** bei unterschiedlichen Temperaturen | | | | | |
| *T_{X}* | *[°C]* | *200°C* | *200°C* | *160* | *150* |
| *MVR bei T_{X}* | *[cm3*/*10min]* | *5* | *13* | *15* | *13* |
| *MVR bei T*_{*X*+*10*} | *[cm3*/*10min]* | *130* | *138* | *31* | *26* |
| *MVR bei T*_{*X*+*20*} | *[cm3*/*10min]* | *zu hoch [>200], nicht mehr messbar* | *zu hoch [>200], nicht mehr messbar* | *53* | *40* |
| *Eignung**** | | *nein* | *nein* | *ja* | *ja* |

| | | | | | |
|---|---|---|---|---|---|
| * DSC 2. Aufheizung 5K/min **Die MVR Messungen erfolgten nach ISO 1133. ***Eignung als Rohstoff zur Nutzung in pulverbasierten additiven Fertigungsverfahren | | | | | |

Die hergestellten Pulver wurden mittels einer handelsüblichen Lasersintermaschine des Herstellers EOS GmbH, Baureihe EOS P360 zu Probekörpern verarbeitet. Die Verarbeitungsparameter beim Lasersintern sind in der Tabelle 2 angegeben.

**Tabelle 2: Verarbeitungsparameter bei der Herstellung der Probekörper aus den hergestellten Mitteln durch Lasersintern**

| | | Mittel aus Beispiel 1 | Mittel aus Beispiel 2 | Mittel aus Vergleich3 | Mittel aus Vergleich4 |
|---|---|---|---|---|---|
| Laserenergie | [W] | 40 | 40 | 40 | 40 |
| Bauraumtemperatur | [°C] | 95 | 75 | 95 | 95 |
| Linienabstand Laser | [mm] | 0,2 | 0,13 | 0,2 | 0,2 |
| Lasergeschwindigkeit | [mm/s] | 4000 | 6000 | 4000 | 4000 |
| Pulverschichtstärke | [mm] | 0,15 | 0,15 | 0,15 | 0,15 |

**Tabelle 3: Vergleich der mechanischen Eigenschaften der erfindungsgemäßen Mittel mit bekannten Mitteln**

| | | Mittel aus TPU-Pulver gemäß Beispiel 1 | Mittel aus TPU-Pulver gemäß Beispiel 2 | Mittel gemäß Beispiel 1 aus US 8114334 B2 | Mittel gemäß Vergleich aus US 8114334 B2 |
|---|---|---|---|---|---|
| Härte* | [Shore A] | 90 | 70 | 55-65 | 75 |
| Reißfestigkeit** | [MPa] | 18 | 12,5 | 2,7 | 1,0 |
| Reißdehnung** | [MPa] | 489 | 479 | 170 | 115 |
| Dichte | [g/cm³] | 1,19 | 1,01 | | |

| | | | | | |
|---|---|---|---|---|---|
| *Die Härtemessung erfolgte nach DIN ISO 7619-1. **Die Ermittlung der mechanischen Kenngrößen (Reißfestigkeit, Reißdehnung) erfolgte nach DIN 53504. | | | | | |

Bei der DSC-Messung wurde das Material folgendem Temperaturzyklus unterworfen: 1 Minute bei minus 60°C, danach Aufheizen auf 200°C mit 5 Kelvin/Minute, dann Abkühlen auf minus 60 °C mit 5 Kelvin/Minute, dann 1 Minute bei minus 60°C, dann Aufheizen auf 200°C mit 5 Kelvin/Minute.

Die Vergleichsbeispiele 3 und 4 zeigen, dass nicht jedes beliebige thermoplastische Polyurethan zur Herstellung von Mitteln für pulverbasierte additive Fertigungsverfahren geeignet ist. Sie zeigen bei der Verarbeitung im Lasersintern kein selektives Aufschmelzen der Bereiche, die durch den Laser erwärmt werden, sodass keine ausreichende Abbildegenauigkeit gegeben ist. Die Bauteilgeometrie der aus diesen Mitteln hergestellten Probekörper ist unzureichend, sodass keine für weitere Analysen verwertbaren Probenkörper hergestellt werden konnten. Nur mit den flach aufschmelzenden Materialien aus Beispiel 1 und 2 ist ein exaktes selektives Aufschmelzen des Mittels möglich, wodurch sich eine hohe Abbildegenauigkeit bei hoher Dichte und guten mechanischen Kennwerten ergibt (siehe Tabelle1 und 3). Im Vergleich zu den Literaturbekannten Systemen erreicht man mit den in Beispiel 1 und 2 beschriebenen Mitteln ein hervorragendes mechanisches Eigenschaftsniveau, was sich in hohen Reißfestigkeiten und hohen Reißdehnungen zeigt.

## Patentansprüche

1. Thermoplastisches pulverförmiges Mittel enthaltend 0,02 bis 0,5 Gew.-%, bezogen auf die Gesamtmenge an Mittel, Fließmittel und pulverförmiges thermoplastisches Polyurethan, wobei mindestens 90 Gew.-% des Mittels einen Teilchendurchmesser von kleiner 0,25 mm aufweist, wobei das thermoplastische Polyurethan erhältlich ist aus der Reaktion der Komponenten
a) mindestens ein organisches Diisocyanat
b) mindestens eine mit gegenüber Isocyanatgruppen reaktiven Gruppen aufweisenden Verbindung mit einem zahlenmittleren Molekulargewicht (Mn) von 500 g/mol bis 6000 g/mol und einer zahlenmittleren Funktionalität der Gesamtheit der Komponenten unter b) von 1,8 bis 2,5
c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5
in Gegenwart von
d) gegebenenfalls Katalysatoren
e) gegebenenfalls Hilfs- und/oder Zusatzmitteln
f) gegebenenfalls einen oder mehrere Kettenabbrecher
**dadurch gekennzeichnet, dass** das thermoplastische Polyurethan einen Schmelzbereich (DSC, Differential Scanning Calorimetry; zweite Aufheizung mit Aufheizrate 5K/min) von 20 bis 170°C und eine Shore A Härte gemäß DIN ISO 7619-1 von 50 bis 95 hat und bei einer Temperatur T eine Schmelzvolumenrate (melt volume rate (MVR)) gemäß ISO 1133 von 5 bis 15 cm³/10min und eine Änderung des MVR bei einer Erhöhung dieser Temperatur T um 20 °C von kleiner 90 cm³/10 min aufweist
zur Herstellung von Gegenständen in pulverbasierten additiven Fertigungsverfahren.

2. Verwendung der Mittel gemäß Anspruch 1 in pulverbasierten additiven Fertigungsverfahren zur Herstellung von thermoplastischen Gegenständen.

3. Thermoplastische Gegenstände hergestellt mittels pulverbasierten additiven Fertigungsverfahren aus den Mitteln gemäß Anspruch 1.

## Claims

1. Thermoplastic powder composition containing from 0.02 to 0.5% by weight, based on the total amount of the composition, of plasticizers and powder thermoplastic polyurethane, where at least 90% by weight of the composition has a particle diameter of less than 0.25 mm,
wherein the thermoplastic polyurethane is obtainable from the reaction of the components
a) at least one organic diisocyanate
b) at least one compound having groups which are reactive toward isocyanate groups and a number average molecular weight (Mn) of from 500 g/mol to 6000 g/mol and a number average functionality of the totality of the components under b) of from 1.8 to 2.5
c) at least one chain extender having a molecular weight (Mn) of from 60 to 450 g/mol and a number average functionality of the totality of the chain extenders under c) of from 1.8 to 2.5
in the presence of
d) optionally catalysts
e) optionally auxiliaries and/or additives
f) optionally one or more chain termination agents,
**characterized in that** the thermoplastic polyurethane has a melting range (DSC, differential scanning calorimetry; 2nd heating at a heating rate of 5 K/min.) of from 20°C to 170°C and has a Shore A hardness (DIN ISO 7619-1) of from 50 to 95 and at a temperature T has a melt volume rate (MVR) in accordance with ISO 1133 of from 5 to 15 cm³/10 min and a change in the MVR when increasing this temperature T by 20°C of less than 90 cm³/10 min,
for producing articles in powder-based additive manufacturing processes.

2. Use of the composition according to Claim 1 in powder-based additive manufacturing processes for producing thermoplastic objects.

3. Thermoplastic object produced by means of powder-based additive manufacturing processes from the composition according to Claim 1.

## Revendications

1. Agent thermoplastique en poudre contenant 0,02 à 0,5 % en poids, par rapport à la quantité totale d'agent, d'agents fluidifiants et un polyuréthane thermoplastique en poudre, au moins 90 % en poids de l'agent présentant un diamètre de particule inférieur à 0,25 mm,
le polyuréthane thermoplastique pouvant être obtenu par la réaction des composants :
a) au moins un diisocyanate organique,
b) au moins un composé comprenant des groupes réactifs avec les groupes isocyanate, ayant un poids moléculaire moyen en nombre (Mn) de 500 g/mol à 6 000 g/mol et une fonctionnalité moyenne en nombre de la totalité des composants de b) de 1,8 à 2,5,
c) au moins un agent d'allongement de chaînes ayant un poids moléculaire (Mn) de 60 à 450 g/mol et une fonctionnalité moyenne en nombre de la totalité des agents d'allongement de chaînes de c) de 1,8 à 2,5,
en présence de
d) éventuellement des catalyseurs,
e) éventuellement des adjuvants et/ou des additifs,
f) éventuellement un ou plusieurs agents d'interruption de chaînes,
**caractérisé en ce que** le polyuréthane thermoplastique a une plage de fusion (DSC, calorimétrie différentielle à balayage ; deuxième chauffage avec un taux de chauffe de 5 K/min) de 20 à 170 °C et une dureté Shore A selon DIN ISO 7619-1 de 50 à 95, et, à une température T, un indice de fluidité à chaud (melt volume rate (MVR)) selon ISO 1133 de 5 à 15 cm³/10 min et une modification du MVR lors d'une élévation de cette température T de 20 °C de moins de 90 cm³/10 min, pour la fabrication d'articles par des procédés de fabrication additifs à base de poudres.

2. Utilisation des agents selon la revendication 1 dans des procédés de fabrication additifs à base de poudres pour la fabrication d'articles thermoplastiques.

3. Articles thermoplastiques fabriqués par des procédés de fabrication additifs à base de poudres à partir des agents selon la revendication 1.
